# EUROPÄISCHE PATENTSCHRIFT

(11) **EP 0 849 570 B1**
(45) Veröffentlichungstag und Bekanntmachung des Hinweises auf die Patenterteilung: **13.09.2006**
(21) Anmeldenummer: 96120580.4
(22) Anmeldetag: 20.12.1996
(51) Int. Cl.: G01F 23/26

(54) **Endkapsel für eine Seilsonde**
Terminal capsule for a wire sensor
Capsule terminale pour un capteur à fil

(43) Veröffentlichungstag der Anmeldung: 24.06.1998
(73) Patentinhaber: Endress + Hauser GmbH + Co. KG, 79689 Maulburg (DE)
(72) Erfinder: Schmidt, Robert, 79585 Steinen (DE)

(56) Entgegenhaltungen:
- DE-A- 4 224 635
- US-A- 2 973 477
- US-A- 3 062 994

## Beschreibung

Die Erfindung betrifft eine Endkapsel für eine Seilsonde.

Seilsonden werden insb. zur kapazitiven Füllstandsmessung eingesetzt. Das Seil dient als eine Meßelektrode, die mit einer Wechselspannung gespeist wird. Die durch einen Meßkreis aufzunehmende Meßgröße ist die Kapazität eines aus der Meßelektrode und einer Gegenelektrode gebildeten Kondensators. Die Gegenelektrode kann bei einer Füllstandsmessung in einem Behälter z.B. die Wand des Behälters sein. Das Medium, dessen Füllstand zu messen ist füllt in Abhängigkeit vom Füllstand einen Raum zwischen den beiden Elektroden aus. Die Kapazität des Kondensator ändert sich somit in Abhängigkeit vom Füllstand.

In der Praxis werden sehr häufig vollständig mit einem Isolationsmaterial überzogene Meßelektroden eingesetzt. Übliche Materialien für die Isolation sind Polyvinylchlorid, Polypropylen, Polyethylen und Fluorkunststoffe, z.B. Polytetrafluoräthylen. Fluorkunststoffe zeichnen sich durch eine hohe chemische Beständigkeit aus.

Die Isolation stellt z.B. eine galvanische Trennung zwischen einer Meßschaltung auf der einen Seite und dem Füllgut auf der anderen Seite dar. Sie bewirkt beispielsweise, daß der Meßkreis durch eine gegebenenfalls vorhandene elektrische Leitfähigkeit des Füllguts nicht oder nicht so stark belastet wird.

Häufig sind derartige Sonden mit einer Endkapsel versehen. Sonde und Endkapsel werden in einen Behälter eingebracht und die Behälteröffnung geeignet verschlossen, z.B. durch ein Anschlußgehäuse der Sonde. Die Endkapsel dient z.B. als Gewicht, durch das das Seil in dem Behälter straffgezogen ist.

Der Endkapsel kommt immer dann eine besondere Bedeutung zu, wenn es aufgrund deren besonderer Konstruktion für den Anwender möglich ist seine Sonde, z.B. durch Abschneiden, auf eine gewünschte Länge zu kürzen. Der Anwender braucht somit nur Sonden einer Länge auf Lager zu halten und kann diese jederzeit auf die gerade erforderliche Länge kürzen. Dies vereinfacht die Lagerhaltung und erhöht die Flexibilität, da eine solche Sonde praktisch universell einsetzbar ist.

Die Endkapsel bildet eine Isolation für ein evtl. nicht mit einer Isolationsschicht versehenes Ende des Seils. Dies liegt immer vor, wenn die Sonde durch Abschneiden auf eine gewünschte Länge gekürzt wurde.

In der DE-A 42 24 635 ist eine Endkapsel für eine Seilsonde beschrieben
- mit einem zylindrischen Topf,
- mit einem eine zentrische Bohrung aufweisenden Deckel,
- mit einem in dem Topf angeordneten Einsatz,
   --- in dem das Seil fixiert ist und
- mit einem Dichtelement mit einer zentrischen Bohrung,
   -- das mit einer inneren Ringfläche dichtend an dem Seil anliegt,
- bei dem das Seil durch den Deckel und das Dichtelement hindurch und in den Einsatz hinein geführt ist.

Der Deckel und der zylindrische Topf bestehen aus einem einzigen Bauteil. Den Topfboden bildet eine auf der deckelabgewandten Seite angeordnete Verschlußschraube. In dem Deckel ist eine rohrförmige von dem Seil durchdrungene Dichtung vorgesehen, die durch eine Druckbuchse gegen den Deckel und das Seil eingespannt ist. Die Druckbuchse ist durch eine auf der Verschlußschraube angeordnete zylindrische Spiralfeder in deckel-zugewandter Richtung gepreßt. In der Feder ist eine Hülse angeordnet. Das freie Ende des Seils ist durch eine Öffnung in einem die Hülse abschließenden Deckel durch diese hindurch zu ziehen, scharf umzubiegen und so wieder in die Hülse einzubringen, daß ein Seilabschnitt und das umgebogene Ende des Seils parallel zueinander in der Hülse angeordnet sind. Damit das Seil hierdurch fixiert ist, weist die Hülse einen Innendurchmesser auf, der gleich dem Zweifachen des Seildurchmessers ist und die Öffnung im Deckel der Hülse weist einen Durchmesser auf, der etwa gleich dem Seildurchmesser ist. Für eine Stabsonde ist diese Befestigung nicht geeignet.

Ein Nachteil einer solchen Endkapsel besteht darin, daß an zwei Orten Dichtheit sicherzustellen ist, nämlich zwischen Deckel und Seil und zwischen Topf und Verschlußschraube.

Ein weiterer Nachteil besteht darin, daß durch die angegebene Seilfixierung in der Hülse innerhalb der Feder ein Mindestdurchmesser der Endkapsel vorgegeben ist, der deutlich größer ist, als der Durchmesser des Seils. Hierdurch bedingt muß auch eine Behälteröffnung, durch die die Sonde einzubringen ist eine entsprechende Mindestgröße aufweisen.

Es ist eine Aufgabe der Erfindung, eine Endkapsel für eine Seilsonde anzugeben, die leicht zu montieren ist, eine geringe Anzahl Dichtstellen aufweist, einen geringen Außendurchmesser aufweist und vom Anwender auf eine gewünschte Länge reduziertbar ist.

Hierzu besteht die Erfindung in einer Endkapsel für eine Seilsonde
- mit einem zylindrischen Topf,
- mit einem eine zentrischen Bohrung aufweisenden Deckel,
- mit einem zylindrischen in dem Topf angeordneten Einsatz,
   -- der eine Sackloch-Bohrung aufweist,
      --- in der ein Seil fixierbar ist und
      --- die auf der deckel-zugewandten Seite endseitig einen Abschnitt mit einer konisch aufgeweiteten Ausnehmung aufweist,
   - mit einem Dichtelement mit einer zentrischen Bohrung,
      -- das einen außen konischen ersten Abschnitt aufweist,
         --- der innerhalb der konisch aufgeweiteten Ausnehmung des Einsatzes angeordnet ist, und
         --- der mit einer inneren Ringfläche dichtend an dem Seil anliegt, und
      -- das einen zweiten Abschnitt mit einer konischen Ausnehmung aufweist,
         --- der mit einer äußeren Ringfläche dichtend an einer inneren Ringfläche des Topfs anliegt, und
   - mit einem Stopfen mit einer zentrischen Bohrung,
      -- der einen Konus aufweist, der mindestens teilweise innerhalb der konischen Ausnehmung des Dichtelements angeordnet ist,
   - bei der der Deckel mit einer Stirnfläche gegen eine dichtelement-abgewandte Ringfläche des Stopfens gepreßt ist und
   - bei dem das Seil zwecks Fixierung durch den Deckel, den Stopfen und das Dichtelement hindurch und in den Einsatz hinein führbar ist.

Gemäß einer Ausgestaltung der Erfindung ist die Konus-Steigung des außen konischen ersten Abschnitts des Dichtelements größer als die der konischen Ausnehmung des zweiten Abschnitts.

Gemäß einer Ausgestaltung der Erfindung ist im Inneren des Dichtelements zwischen dem ersten und dem zweiten Abschnitt ein Absatz angeordnet, auf dem der Stopfen mit einer Stirnfläche aufliegt.

Gemäß einer Ausgestaltung der Erfindung ist die Konus-Steigung des außen konischen ersten Abschnitts des Dichtelements größer als die der konischen Ausnehmung des Abschnitts der Sackloch-Bohrung des Einsatzes.

Gemäß einer Ausgestaltung der Erfindung ist die Konus-Steigung der konischen Ausnehmung des zweiten Abschnitts des Dichtelements größer als die des Konus des Stopfens.

Gemäß einer Ausgestaltung der Erfindung weist der Deckel ein Gewinde auf und ist in den Topf eingeschraubt.

Gemäß einer Ausgestaltung der Erfindung liegt der Einsatz auf einer auf dem Boden des Topfs angeordneten Feder auf.

Gemäß einer Ausgestaltung der Erfindung ist zwischen dem Boden und der Feder eine Unterlegscheibe angeordnet.

Gemäß einer Ausgestaltung der Erfindung besteht der Einsatz aus einem Metall, insb. aus Stahl oder Edelstahl und der Topf, der Deckel , das Dichtelement und der Stopfen bestehen jeweils aus Polyvinylchlorid, Polypropylen, Polyethylen oder aus einem Fluorkunststoff, insb. aus Polytetrafluoräthylen.

Gemäß einer Ausgestaltung der Erfindung weisen Bauteile durch die das Seil bei der Montage hindurch oder hinein zu führen ist, Öffnungen oder Bohrungen auf, die jeweils endseitig einen Abschnitt aufweisen, dessen Innendurchmesser in axialer Richtung so variiert, daß das Seil beim Einführen zentriert wird.

Die Erfindung und deren Vorteile werden nun anhand der Figuren der Zeichnung, in denen ein Ausführungsbeispiel dargestellt ist, näher erläutert; gleiche Elemente sind in den Figuren mit gleichen Bezugszeichen versehen.
- Fig. 1: zeigt einen Längsschnitt durch eine Endkapsel;
- Fig. 2: zeigt eine teilweise geschnittene Ansicht des Deckels Fig. 1;
- Fig. 3: zeigt eine Draufsicht auf den Deckel von Fig. 1;
- Fig. 4: zeigt einen Längsschnitt durch das Dichtelement von Fig. 1; und
- Fig. 5: zeigt einen Längsschnitt durch den Stopfen von Fig. 1.

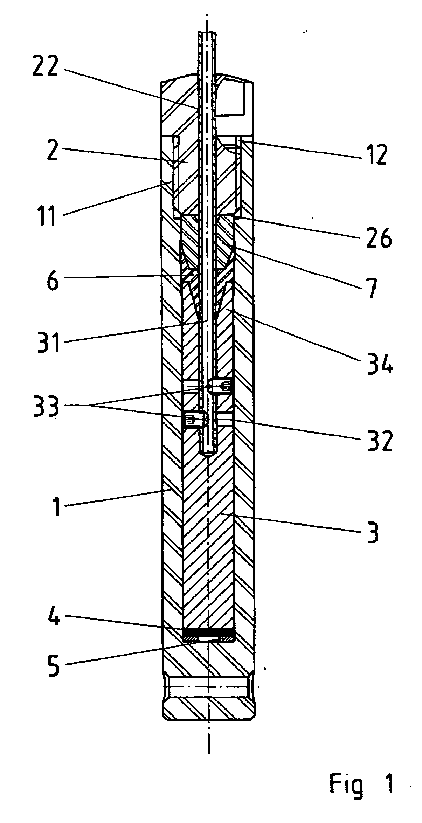

Das in Fig. 1 dargestellten Ausführungsbeispiel einer erfindungsgemäßen Endkapsel für eine Seilsonde weist einem zylindrischen Topf 1 auf, der durch einen Deckel 2 verschlossen ist.

Der Topf 1 weist an dessen offenem Ende einen Bereich 11 mit geringfügig größerem Innendurchmesser auf. In diesem ist ein Gewinde 12 angeordnet.

Der Deckel 2 hat die Form einer Schraube mit Schraubenkopf und ist mit einem Gewinde 21 in den Topf 1 eingeschraubt. Zur Erleichterung des Einschraubens des Deckels 2 weist der dem Schraubenkopf entsprechende Abschnitt des Deckels 2 zwei einander gegenüberliegende ebene Schlüsselflächen 24, 25 auf.

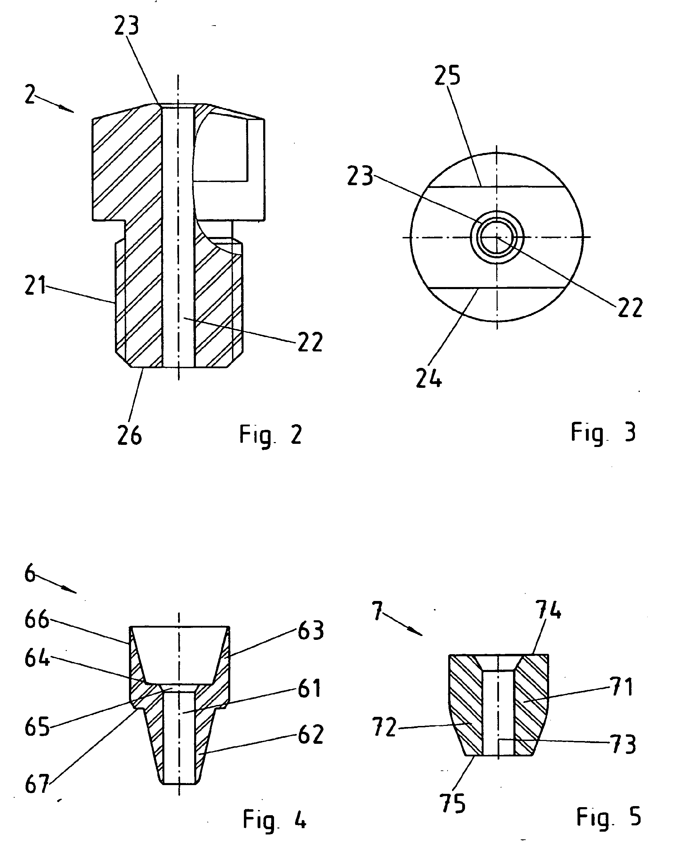

Fig. 2 zeigt eine teilweise geschnittene Ansicht des Deckels 2 und Fig. 3 zeigt eine Draufsicht auf den Deckel 2. Dieser weist eine zentrischen Bohrung 22 auf durch die hindurch das Seil einzuführen ist. Zur Erleichterung dieses Vorgangs ist die Bohrung 22 auf der topf-abgewandten Seite konisch aufgeweitet. Der aufgeweitete Bereich ist in den Figuren 2 und 3 mit dem Bezugzeichen 23 versehen.

Im Fall einer isolierten Sonde bestehen Topf 1 und Deckel 2 sowie alle weiteren medium-berührten Bauteile vorzugsweise aus dem Material aus dem die Isolierung des Seils besteht. Beispiele hierfür sind Polyvinylchlorid, Polypropylen, Polyethylen und Fluorkunststoffe, z.B. Polytetrafluoräthylen. Hierdurch ist gewährleistet, daß alle Bauteile die gleiche hohe chemische Beständigkeit aufweisen.

In dem Topf 1 ist ein zylindrischer Einsatz 3, z.B. aus Metall, insb. aus Stahl, Edelstahl oder Blei angeordnet. Dieser liegt im Topf 1 auf einer Feder 4 auf. In dem Ausführungsbeispiel von Fig. 1 ist eine Flachdraht-Druckfeder dargestellt. Es können jedoch auch andere Federn, z.B. andere Arten von Spiralfedern oder Tellerfedern eingesetzt werden. Damit sichergestellt ist, daß die Feder 4 nicht über die Zeit in den Boden des Topfs 1 einschneidet, ist zwischen Feder 4 und Topfboden eine Unterlegscheibe 5 angeordnet.

Die Lage der Feder 4 am Boden des Topfes 1 bewirkt, daß durch die Feder 4 die temperatur- und/oder ermüdungsbedingte Längenänderung des gesamten Topfes 1 ausgeglichen wird.

Der Einsatz 3 weist eine Sackloch-Bohrung 31 auf, in der das Seil fixiert ist. Hierzu ist mindestens eine senkrecht zur Sackloch-Bohrung 31 verlaufende Bohrung 32, z.B. eine Gewindebohrung, vorgesehen, in die Fixierschrauben 33, z.B. Gewindestifte mit Innensechskant, einzuschrauben sind.

Auf deren deckel-zugewandten Seite weist die Sackloch-Bohrung 31 endseitig einen konisch aufgeweiteten Abschnitt 34 auf.

Auf der feder-abgewandten Seite des Einsatzes 3 ist in dem Topf 1 ein Dichtelement 6 angeordnet. Fig. 4 zeigt einen Längsschnitt durch dieses Dichtelement 6. Es weist eine durchgehende zentrischen Bohrung 61 auf und besteht im wesentlichen aus zwei Abschnitten, nämlich einem außen konischen ersten Abschnitt 62 und einem innen konischen zweiten Abschnitt 63.

Der erste Abschnitt 62 ist, wie in Fig. 1 dargestellt, in dem konisch aufgeweiten Abschnitt 34 der Sackloch-Bohrung 31 angeordnet. Er weist einen Innendurchmesser auf, der gleich dem Außendurchmesser des Seils ist. Der zweite Abschnitt 63 weist eine zylindrische äußere Mantelfläche auf und besitzt eine Außendurchmesser, der gleich dem Innendurchmesser des Topfs 1 ist. Der außen konische erste Abschnitt 62 weist an dessen an den zweiten Abschnitt 63 angrenzenden Seite einen Außendurchmesser auf, der geringer ist als der Innendurchmesser des Topfs 1. Zwischen den beiden Abschnitten 62, 63 besteht somit außen an dem Dichtelement 6 ein Absatz 67.

Im Inneren des Dichtelements 6 ist zwischen dem ersten und dem zweiten Abschnitt 62, 63 ein Absatz 64 angeordnet. An diesen grenzt auf der einsatz-abgewandten Seite der konische Innenraum des zweiten Abschnitts 63 mit dessen den kleineren Durchmesser aufweisenden Ende an. Auf der einsatz-zugewandten Seite des Absatzes 64 grenzt an diesen die durchgehende Bohrung 61 an. Die Bohrung 61 weist an deren an den Absatz 64 angrenzenden Ende einen in einsatzabgewandter Richtung konisch aufgeweiteten Abschnitt 65 auf.

Weiterhin ist ein in Fig. 5 im Längsschnitt dargestellter Stopfen 7 vorgesehen. Dieser besteht aus einem Zylinder 71 und einem endseitig daran angeformten Konus 72. Dieser ist mindestens teilweise in dem innen konischen Abschnitt 63 des Dichtelements 6 angeordnet. Der Stopfen 7 weist eine durchgehende zentrische Bohrung 73 auf, deren Durchmesser dem Durchmesser des Seils entspricht.

Das Dichtelement 6 füllt nahezu den gesamten verbleibenden freien Innenraum des Topfs 1 aus. Es bestehen insb. keine Spalte oder Hohlräume in die das Material des Dichtelements 6 z.B. temperatur- und/oder ermüdungs-bedingt über die Zeit hineinfließen könnte. Es ist damit eine Grundlage für eine Langzeitdichtheit gegeben.

Das Seil ist von dem Anwender vor der Montage auf eine beliebige durch die spezielle Anwendung vorgegebene Länge zu kürzen.

Bei der Montage der Endkapsel sind in der nachfolgend angegebenen Reihenfolge der Deckel 2, der Stopfen 7 und das Dichtelement 6 auf das Seil aufzuschieben. Anschließend ist das durch diese Bauteile hindurchgeführte Ende des Seils in den Einsatz 3 hineinzuführen und die Fixierschrauben 33 sind anzuziehen.

Alle Bauteile durch die das Seil bei der Montage hindurch oder hinein zu führen ist, nämlich der Deckel 2, der Stopfen 7, das Dichtelement 6 und der Einsatz 7, weisen Öffnungen oder Bohrungen auf, die jeweils endseitig einen Abschnitt aufweisen, dessen Innendurchmesser in axialer Richtung so variiert, daß das Seil beim Einführen zentriert wird.

Nach dem Einlegen der Unterlegscheibe 5 und der Feder 4 in den Topf 1 ist der Einsatz 3 in diesen einzusetzen und der Deckel 2 einzuschrauben.

Hierdurch ist der Deckel 2 mit einer Stirnfläche 26 gegen eine dichtelement-abgewandte Ringfläche 74 des Stopfens 7 gepreßt. Über den Stopfen 7 wird so eine radial nach außen gerichtete Kraft auf den innen konischen Abschnitt 63 des Dichtelements 6 ausgeübt. Dieser liegt somit mit einer äußeren Ringfläche 66 dichtend an einer innerer Ringfläche des Topfs 1 an.

Die genannten Werkstoffe für den Topf 1 sind verhältnismäßig weich. Es ist also möglich, daß der Topf 1 im Bereich der vorgenannten Ringfläche eine Aufweitung erfährt. Diese Aufweitung wird dadurch begrenzt, daß der Stopfen 7 nicht beliebig weit in das Dichtelement 6 hineinpreßbar ist. Diese Bewegung wird blockiert, sobald der Stopfen 7 mit einer Stirnfläche 75 auf dem Absatz 64 aufliegt.

Ebenso wirkt über den Stopfen 7 in axialer Richtung eine Kraft auf den außen konischen ersten Abschnitt 62 des Dichtelements 6, durch die dieser Abschnitt 62 gegen den Einsatz 3 gepreßt ist. Da der Einsatz 3 aus einem Metall, also aus einem im Vergleich zum Material des Dichtelements 6 sehr harten Werkstoff besteht, wirkt auf den ersten Abschnitt 62 eine nach innen gerichtete Reaktionskraft. Der erste Abschnitt 62 liegt somit mit einer inneren Ringfläche dichtend an dem Seil an.

In axialer Richtung kann das Dichtelement 6 durch das Schließen des Deckels 2 nur soweit in den Einsatz 3 hinein gepreßt werden, bis es mit der Absatzfläche 67 an einer ringförmigen Stirnfläche des Einsatzes 3 aufliegt.

Vorzugsweise ist das Dichtelement 6 so ausgebildet, daß die Konus-Steigung des außen konischen ersten Abschnitts 62 größer ist, als die Konus-Steigung des innen konischen zweiten Abschnitts 63.

Hierdurch wird im Idealfall erreicht, daß die Dichtwirkung zwischen Seil und Einsatz 3 eintritt, bevor die Dichtwirkung zwischen Topf 1 und Dichtelement 6 eintritt.

Die Konus-Steigung ist ein Maß für die Steilheit eines Konus bzw. einer konischen Mantelfläche. Ein erster Konus weist dann eine größere Konus-Steigung als ein zweiter Konus gleicher Höhe auf, wenn die Differenz von dem größten und dem kleinsten Radius des ersten Konus kleiner ist als die selbe Differenz des zweiten Konus.

Je größer die Konus-Steigung des ersten Abschnitts 62, umso geringer ist die Kraft die zur Erzielung der Dichtheit erforderlich ist.

Vorteilhafterweise sind die Konus-Steigungen aller Koni möglichst groß zu wählen. Dadurch wird das Drehmoment, das zum Anziehen des Deckels 2 erforderlich ist, gering gehalten. Je kleiner die erforderlichen Kräfte sind, desto weniger besteht die Gefahr von Materialverformungen im Bereich des Gewindes 12. Endkapseln mit einem geringen Außendurchmesser, z.B. von 20 mm, sind so herstellbar.

Auch erweist es sich als vorteilhaft, die Konus-Steigung des außen konischen ersten Abschnitts 62 des Dichtelements 6 geringfügig größer als die des konischen Abschnitts 34 der Sackloch-Bohrung 31 des Einsatzes 3 auszubilden. Hierdurch werden die Kräfte beim Schließen des Deckels 2 zunächst auf die dünnenwandige einsatz-zugewandte Spitze des ersten Abschnitts 62 konzentriert. Der Anteil der Kraftkomponente, die radial nach innen wirkt und somit für die Dichtwirkung verantwortlich ist, ist umso größer, je größer die Konus-Steigung ersten Abschnitts 62 des Dichtelements 6 im Vergleich zu der des konischen Abschnitts 34 der Sackloch-Bohrung 31 des Einsatzes 3 ist.

Analog gilt für die Konus-Steigung des innen konischen zweiten Abschnitts 63 des Dichtelements 6, daß sie vorzugsweise geringfügig größer als die Konus-Steigung des Konus 72 des Stopfens 7 ist. Der Anteil der Kraftkomponente, die radial nach außen wirkt und somit für die Dichtwirkung verantwortlich ist, ist umso größer, je größer die Konus-Steigung zweiten Abschnitts 63 des Dichtelements 6 im Vergleich zu der des Konus 72 des Stopfens 7 ist.

Der Topf 1, der Deckel 2, das Dichtelement 6 und der Stopfen 7 bestehen vorzugsweise jeweils aus dem gleichen Material. Ist das Seile, wie üblich, isoliert, so ist vorzugsweise für diese Bauteile der gleiche Werkstoff einzusetzen, der auch als Isolationsmaterial verwendet ist. Beispiele hierfür sind Polyvinylchlorid, Polypropylen, Polyethylen und Fluorkunststoffe, z.B. Polytetrafluoräthylen. Besonders gute Resultate werden mit Polytetrafluoräthylen erzielt, wenn diesem geringe Mengen eines thermoplastischen Fluorkunststoffs beigefügt werden. Dieser Werkstoff bietet neben einer auch für dünne Endkapseln ausreichenden Festigkeit den Vorteil einer sehr glatten Oberfläche. Dadurch wird die Dichtwirkung zusätzlich verbessert.

Vorteilhaft für die Dichtwirkung ist weiterhin, daß die Wandstärken der beiden konischen Abschnitte 62, 63 des Dichtelments 6 verhältnismäßig gering sind. Legt man bei der dargestellten Endkapsel einen Außendurchmesser von 20 mm zugrunde, so kann die Wandstärke des außen konischen ersten Abschnitts 62 an dessen an den Absatz 67 angrenzenden Bereich z.B. ca. 5 mm und an dessen Spitze z.B. weniger als 1 mm betragen. Bei einer solchen Dicke verformen sich die genannten Werkstoffe bereits bei sehr geringer Krafteinwirkung. Das Material des Dichtelements 6 fließt somit in alle auszufüllenden Spalte. Dies ist bei Seilsonden besonders wichtig. Die Seile sind beispielsweise kunststoff-ummantelte Drähte oder Rundlitzenseile. Die Mantelflächen dieser Seile sind folglich auch bei isolierten Seilsonden nicht exakt zylindrisch, sondern weisen Unebenheiten auf. Ein Seil mit einem Durchmesser von ca. 4 mm kann z.B. Schwankungen des Durchmessers von etwa ± 0,1 mm aufweisen. Diese werden durch das beschriebene Dichtelement 6 problemlos ausgeglichen.

Selbstverständlich ist die erfindungsgemäße Endkapsel auch für Stabsonden einsetzbar.

Eine erfindungsgemäße Endkapsel mit einem Außendurchmesser von 20 mm bei der Topf 1, Deckel 2, Dichtelement 6 und Stopfen 7 aus Polytetrafluorethylen bestehen, ist bei Temperaturen von bis zu 100 °C und bei Drücken von bis zu 25 bar einsetzbar.

## Patentansprüche

1. Endkapsel für eine Seilsonde
- mit einem zylindrischen Topf (1),
- mit einem eine zentrischen Bohrung (22) aufweisenden Deckel (2),
- mit einem zylindrischen in dem Topf (1) angeordneten Einsatz (3),
-- der eine Sackloch-Bohrung (31) aufweist,
--- in der ein Seil fixierbar ist und
--- die auf der deckel-zugewandten Seite endseitig einen Abschnitt (34) mit einer konisch aufgeweiteten Ausnehmung aufweist,
- mit einem Dichtelement (6) mit einer zentrischen Bohrung (61),
-- das einen außen konischen ersten Abschnitt (62) aufweist,
--- der innerhalb der konisch aufgeweiteten Ausnehmung des Einsatzes (3) angeordnet ist, und
--- der mit einer inneren Ringfläche dichtend an dem Seil anliegt, und
-- das einen zweiten Abschnitt (63) mit einer konischen Ausnehmung aufweist,
--- der mit einer äußeren Ringfläche (66) dichtend an einer inneren Ringfläche des Topfs (1) anliegt, und
- mit einem Stopfen (7) mit einer zentrischen Bohrung (73),
-- der einen Konus (72) aufweist, der mindestens teilweise innerhalb der konischen Ausnehmung des Dichtelements (6) angeordnet ist,
- bei der der Deckel (2) mit einer Stirnfläche (24) gegen eine dichtelement-abgewandte Ringfläche (74) des Stopfens (7) gepreßt ist und
- bei dem das Seil zwecks Fixierung durch den Deckel (2), den Stopfen (7) und das Dichtelement (6) hindurch und in den Einsatz (3) hinein führbar ist.

2. Endkapsel nach Anspruch 1, bei der die Konus-Steigung des außen konischen ersten Abschnitts (62) des Dichtelements (6) größer ist als die der konischen Ausnehmung des zweiten Abschnitts (63).

3. Endkapsel nach Anspruch 1, bei dem im Inneren des Dichtelements (6) zwischen dem ersten und dem zweiten Abschnitt (62, 63) ein Absatz (64) angeordnet ist, auf dem der Stopfen (7) mit einer Stirnfläche (75) aufliegt.

4. Endkapsel nach Anspruch 1, bei der die Konus-Steigung des außen konischen ersten Abschnitts (62) des Dichtelements (6) größer ist als die der konischen Ausnehmung des Abschnitts (34) der Sackloch-Bohrung (31) des Einsatzes (3).

5. Endkapsel nach Anspruch 1, bei der die Konus-Steigung der konischen Ausnehmung des zweiten Abschnitts (63) des Dichtelements (6) größer ist als die des Konus (72) des Stopfens (7).

6. Endkapsel nach Anspruch 1, bei dem der Deckel (2) ein Gewinde (21) aufweist und in den Topf (1) eingeschraubt ist.

7. Endkapsel nach Anspruch 1, bei der der Einsatz (3) auf einer auf dem Boden des Topf (1) angeordneten Feder (4) aufliegt.

8. Endkapsel nach Anspruch 7, bei der zwischen dem Boden und der Feder (4) eine Unterlegscheibe (5) angeordnet ist.

9. Endkapsel nach Anspruch 1, bei der der Einsatz (3) aus einem Metall, insb. aus Stahl oder Edelstahl besteht und bei der der Topf (1), der Deckel (2), das Dichtelement (6) und der Stopfen (7) jeweils aus Polyvinylchlorid, Polypropylen, Polyethylen oder aus einem Fluorkunststoff, insb. aus Polytetrafluoräthylen, bestehen.

10. Endkapsel nach Anspruch 1, bei dem Bauteile durch die das Seil bei der Montage hindurch oder hinein zu führen ist, Öffnungen oder Bohrungen aufweisen, die jeweils endseitig einen Abschnitt aufweisen, dessen Innendurchmesser in axialer Richtung so variiert, daß das Seil beim Einführen zentriert wird.

## Claims

1. End capsule for a cable probe
- with a cylindrical cup (1),
- with a cover (2) having a central bore (22),
- with a cylindrical insert (3) arranged in the cup (1),
-- which insert has a blind-hole bore (31),
--- in which a cable can be fixed and
--- which has at the end, on the side facing the cover, a portion (34) with a conically widened cutout,
- with a sealing element (6) with a central bore (61),
-- which sealing element has an outwardly conical first portion (62),
--- which is arranged within the conically widened cutout of the insert (3), and
--- which bears by an inner annular face against the cable in a sealing manner, and
-- which has a second portion (63) with a conical cutout,
--- which portion bears by an outer annular face (66) against an inner annular face of the cup (1) in a sealing manner, and
- with a plug (7) with a central bore (73),
-- which plug has a cone (72) which is arranged at least partially within the conical cutout of the sealing element (6),
- in which the cover (2) is pressed by an end face (24) against an annular face (74), facing away from the sealing element, of the plug (7) and
- in which the cable, for the purpose of fixing, can be led through the cover (2), the plug (7) and the sealing element (6) and into the insert (3).

2. End capsule according to Claim 1, in which the taper of the outwardly conical first portion (62) of the sealing element (6) is greater than that of the conical cutout of the second portion (63).

3. End capsule according to Claim 1, in which there is arranged inside the sealing element (6), between the first portion and the second portion (62, 63), a shoulder (64) on which the plug (7) rests by an end face (75).

4. End capsule according to Claim 1, in which the taper of the outwardly conical first portion (62) of the sealing element (6) is greater than that of the conical cutout of the portion (34) of the blind-hole bore (31) of the insert (3).

5. End capsule according to Claim 1, in which the taper of the conical cutout of the second portion (63) of the sealing element (6) is greater than that of the cone (72) of the plug (7).

6. End capsule according to Claim 1, in which the cover (2) has a thread (21) and is screwed into the cup (1).

7. End capsule according to Claim 1, in which the insert (3) rests on a spring (4) arranged on the base of the cup (1).

8. End capsule according to Claim 7, in which a shim (5) is arranged between the base and the spring (4).

9. End capsule according to Claim 1, in which the insert (3) consists of a metal, in particular of steel or high-grade steel, and the cup (1), the cover (2), the sealing element (6) and the plug (7) in each case consist of polyvinyl chloride, polypropylene, polyethylene or of a fluoropolymer, in particular of polytetrafluoroethylene.

10. End capsule according to Claim 1, in which components through which or into which the cable is to be led during assembly have openings or bores which in each case have at the end a portion, of which the internal diameter varies in the axial direction in such a way that the cable is centred when it is led in.

## Revendications

1. Capsule d'extrémité pour une sonde à câble
- avec un pot cylindrique (1)
- avec un couvercle (2) présentant un alésage central (22),
- avec un insert (3) cylindrique disposé dans le pot (1),
-- qui présente un alésage borgne (31),
--- dans lequel il est possible de fixer un câble et
--- qui présente en son extrémité côté couvercle une partie (34) avec un creux à évasement conique,
- avec un élément d'étanchéité (6) pourvu d'un alésage central (61),
-- qui présente une première partie (62) d'extérieur conique,
--- qui est disposé à l'intérieur du creux à évasement conique de l'insert (3), et
--- qui repose de façon étanche avec une surface annulaire intérieure contre le câble, et
-- qui présente une deuxième partie (63) avec un creux à évasement conique,
--- qui repose de façon étanche avec une surface annulaire extérieure (66) contre une surface annulaire intérieure du pot (1), et
- avec un bouchon (7) pourvu d'un alésage central (73),
-- qui présente un cône (72), qui est disposé au moins partiellement à l'intérieur du creux conique de l'élément d'étanchéité (6),
- pour laquelle le couvercle (2) est pressé avec une surface frontale (24) contre une surface annulaire (74) du bouchon (7) opposée à l'élément d'étanchéité et
- pour laquelle le câble peut être guidé à des fins de fixation à travers le couvercle (2), le bouchon (7) et l'élément d'étanchéité (6), et à l'intérieur de l'insert (3).

2. Capsule d'extrémité selon la revendication 1, pour laquelle la conicité de la première partie (62) d'extérieur conique de l'élément d'étanchéité (6) est supérieure à celle du creux conique de la deuxième partie (63).

3. Capsule d'extrémité selon la revendication 1, pour laquelle est disposé à l'intérieur de l'élément d'étanchéité (6), entre la première et la deuxième partie (62, 63), un épaulement (64), sur lequel repose le bouchon (7) avec une surface frontale (75).

4. Capsule d'extrémité selon la revendication 1, pour laquelle la conicité de la première partie (62) d'extérieur conique de l'élément d'étanchéité (6) est supérieure à celle du creux conique de la partie (34) de l'alésage borgne (31) de l'insert (3).

5. Capsule d'extrémité selon la revendication 1, pour laquelle la conicité du creux conique de la deuxième partie (63) de l'élément d'étanchéité (6) est supérieure à celle du cône (72) du bouchon (7).

6. Capsule d'extrémité selon la revendication 1, pour laquelle le couvercle (2) présente un filetage (21) et est vissé dans le pot (1).

7. Capsule d'extrémité selon la revendication 1, pour laquelle l'insert (3) repose sur un ressort (4) disposé sur le fond du pot (1).

8. Capsule d'extrémité selon la revendication 1, pour laquelle une rondelle plate (5) est disposée entre le fond et le ressort (4).

9. Capsule d'extrémité selon la revendication 1, pour laquelle l'insert (3) est constitué de métal, notamment en acier ou acier spécial, et pour laquelle le pot (1), le couvercle (2), l'élément d'étanchéité (6) et le bouchon (7) sont chacun composés de chlorure de polyvinyle, de polypropylène, de polyéthylène ou d'un plastique fluoré, notamment en polytétrafluoréthylène.

10. Capsule d'extrémité selon la revendication 1, pour laquelle les composants, à travers ou dans lesquels le câble doit être guidé lors du montage, présentent des ouvertures ou des alésages, qui présentent chacun à leur extrémité une partie, dont le diamètre intérieur varie en direction axiale de telle manière que le câble soit centré au moment de l'introduction.
